(19) Europäisches Patentamt
European Patent Office
Office européen des brevets

(11) **EP 1 793 590 A1**

(12) **EUROPEAN PATENT APPLICATION**
published in accordance with Art. 158(3) EPC

(43) Date of publication:
**06.06.2007 Bulletin 2007/23**

(51) Int Cl.:
***H04N 5/44*** (2006.01)   ***H04H 1/00*** (2006.01)

(21) Application number: **04792472.5**

(22) Date of filing: **15.10.2004**

(86) International application number:
**PCT/JP2004/015255**

(87) International publication number:
**WO 2006/027857 (16.03.2006 Gazette 2006/11)**

(84) Designated Contracting States:
**DE FI FR GB IT**

(30) Priority: **10.09.2004 WOPCT/JP2004/013220**

(71) Applicant: **MATSUSHITA ELECTRIC INDUSTRIAL CO., LTD.**
**Osaka 571-8501 (JP)**

(72) Inventors:
• **SCHEID, Albrecht**
**c/o Panasonic R&D Center Germany GmbH**
**63225 Langen (DE)**

• **KURSAWE, Thomas**
**c/o Panasonic R&D center Germany GmbH**
**63225 Langen (DE)**
• **USUKI, Izumi**
**c/o Matsushita Elc.Ind.Co;Ltd**
**1-chome Chuo-ku**
**Osaka-shi, Osaka 540-6319 (JP)**

(74) Representative: **Ehlers, Jochen**
**Eisenführ, Speiser & Partner**
**Patentanwälte Rechtsanwälte**
**Postfach 10 60 78**
**28060 Bremen (DE)**

(54) **ZAPPING STREAM GENERATING APPARATUS AND METHOD**

(57)   The zapping stream is transmitted in the same band as the time slice, and therefore the consumption of the transmission band is desirably suppressed to not more than a predetermined amount as far as possible. After restoring the contents from the high-quality contents stream, a specified portion corrected in timing in accordance with the degree of complication of the original image is selectively extracted not at exactly predetermined intervals (not by timing). In this way, the zapping stream is generated with a minimum information amount without deteriorating the quality as far as possible.

FIG. 3

**Description**

TECHNICAL FIELD

This invention relates to a digital broadcasting to portable terminals such as Digital Video Broadcasting-Handheld (DVB-H), or in particular to a transmission apparatus for the digital data broadcasting to portable terminals.

BACKGROUND ART

The portable receiving terminal for the digital broadcast DVB-H for portable terminals in Europe receives the DVB-H audio/video services of the transport stream transmitted in the form of a burst called as a time slice. The audio/video (hereinafter called as "AV") data of about 5 seconds, for example, are transmitted by a single burst of less than 0.2 seconds in length. This burst transmission is very effective for saving the power of the receiver. The receiver saves a considerable amount of the battery power consumption by supplying power from the power supply of the receiving unit only during the period when the burst of the desired service is transmitted, as shown in the reference document EP1337071A2 (Nokia time slicing).

Nevertheless, this has a disadvantage. According to this method, the user desiring the zapping of the same physical channel or another channel has to wait for the arrival of the next burst having the desired service. In a typical case with a burst interval of 5 seconds, an average of 2.5 seconds or a maximum of 5 seconds is required before the video/audio presentation of the new service. The burst period of 9 seconds or longer is considered to achieve the maximum power saving. As compared with the current TV system, therefore, the zapping speed is slow.

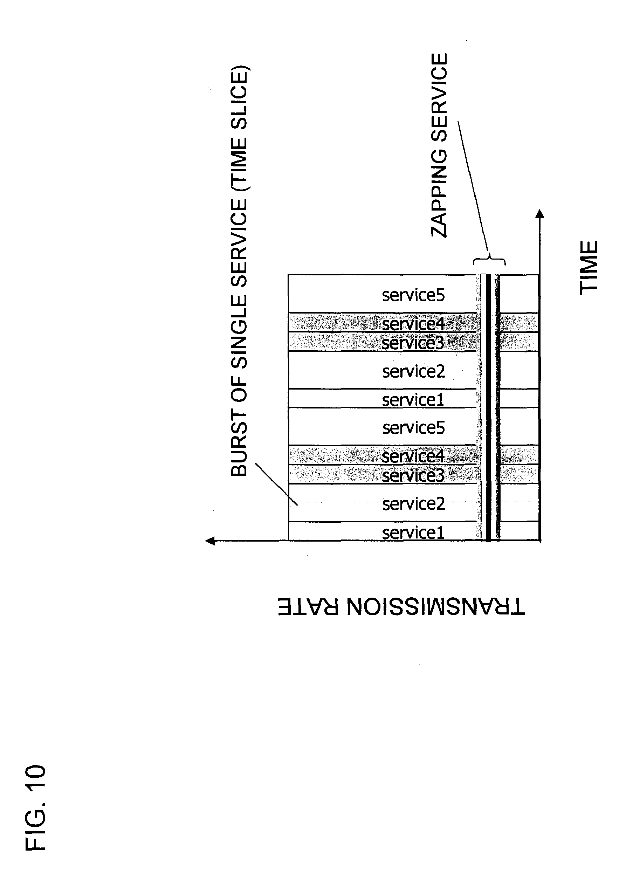

To solve this problem, a method for adaptation of the zapping service stream to the time slice transmission system is conceivable, as shown in Fig. 10.

In the zapping stream, the information on the DVB-H service in the same transport stream is transmitted using a very low data rate. The video/audio contents, the still image, the text information on the service or a combination thereof is an example. The still image, for example, is updated frequently, or by one burst transmission every two times per second in the DVB-H environment or normally at the rate of once every four times per second.

By receiving the zapping stream continuously transmitted, the user can view, hear or read the contents of a selected service before the burst thereof is received and displayed. Therefore, the user can immediately determine whether the selected service or another service is to be received.

SUMMARY OF THE INVENTION

In an application of the above-mentioned zapping service stream to the time slice scheme, the zapping stream used is transmitted in the same band as the time slices and therefore the transmission band consumption is desirably as small as possible and predetermined.

The object of this invention is to solve the above-mentioned problem point by generating the zapping stream minimizing the transmission band with predetermined bandwidth consumption.

Also, the zapping stream is normally generated at the IP level like the normal services. Another object of the invention is to generate these IP datagrams as those of normal services with an inexpensive additional zapping service process and apparatus, a short receiving access time and a small additional bandwidth.

According to this invention, there is provided a zapping stream generating method and apparatus for generating the data of the zapping stream from a high-quality content stream. The method and apparatus are characterized by after restoring the contents from the high-quality content stream, a specified portion corrected in timing in accordance with the degree of complication of the original image, but not at strictly regular time intervals (not based on the timing), is selectively extracted, so that the zapping stream is generated with the minimum information amount without deteriorating the quality as far as possible.

According to this invention, the image portion with a small degree of complication is extracted selectively, and therefore the zapping stream can be generated with the minimum amount of information without deteriorating the quality as far as possible.

Also, there is provided a zapping stream generating method and apparatus characterized in that in the case where the image is extracted at a predetermined timing and the generation of an increased information amount at the time of re-encoding is expected, a part of the image is trimmed thereby to reduce the information amount generated.

Further, there is provided a zapping stream generating method and apparatus characterized in that the amount of information generated is reduced by reducing the resolution of the image.

Furthermore, there is provided a zapping stream generating method and apparatus characterized in that the main stream for the time slice and the zapping stream are generated from the same content source at the same time from the transport stream thereby to reduce the delay time between the zapping stream and the main stream.

According to this invention, there is also provided the above-mentioned zapping stream generating method, or an IP data cast transmission system using the zapping and a program for implementing the system, and a recording medium for recording them.

This invention, explained with reference to "DESCRIPTION OF THE PREFERRED EMBODIMENTS" below and the drawings, is intended to be illustrative and not limited to them.

According to this invention, an image of low degree of complication that can be encoded with a good quality within a defined stream size is extracted, so that a zapping stream can be generated with predetermined bandwidth consumption while minimizing the transmission band from the image signal having a changing degree of complication.

Also, the IP service stream and the related zapping stream are generated from the same signal source at the same time thereby to facilitate the synchronization at the time of reproduction by the receiver.

Also, according to this invention, the apparatus can be configured in simple fashion by using a common IP address for the zapping service and the original service, and the zapping stream can be generated with a short access time for receiving and a small additional bandwidth.

BRIEF DESCRIPTION OF THE DRAWINGS

The present invention will become readily understood from the following description of preferred embodiments thereof made with reference to the accompanying drawings, in which like parts are designated by like reference numeral and in which:

Fig. 1 is a diagram showing an example of the IP data cast transmission system according to a first embodiment of the invention;

Fig. 2 is a diagram showing an example of the IP data cast transmission system according to first and third embodiments of the invention;

Fig. 3 is a diagram showing an example of the process executed by the zapping service generating apparatus according to the first and second embodiments of the invention;

Fig. 4 is a diagram showing the relation between the receiving and the display of the zapping service data containing a selected frame;

Fig. 5 is a diagram showing an example of the process executed by the IP service generating apparatus according to the third embodiment of the invention;

Fig. 6 is a diagram showing an example of the process executed by the zapping service generating apparatus according to the third embodiment of the invention;

Fig. 7 is a diagram showing an example of the process executed by the zapping service generating apparatus according to a fourth embodiment of the invention;

Fig. 8 is a diagram for explaining a transmission method of stream type according to the invention;

Fig. 9 is a diagram for explaining a transmission method of burst type according to the invention;

Fig. 10 is a diagram for explaining the transmission by the zapping stream and the time slice method;

Fig. 11 is a diagram showing a plurality of zapping streams added to the MPE-FEC frame;

Fig. 12 is a diagram showing an example of the IP data cast transmission system utilizing the IP stream zapping service according to the invention;

Fig. 13 is a diagram showing the layout of an application data table for storing the IP streams according to the invention;

Fig. 14 is a typical example of transmission of 21 services according to the invention; and

Fig. 15 is a diagram showing an example of the process executed by the zapping service generating apparatus according to a fifth embodiment of the invention.

DESCRIPTION OF REFERENCE NUMERALS

| | |
|---|---|
| 200 | IP service supply unit |
| 220, 260, 330 | Multi-protocol encapsulator (MPE) |
| 240 | Zapping service generating apparatus |
| 290 | MPEG TS multiplexer |
| 300 | MPEG 2-type AV service source |

DESCRIPTION OF THE PREDETERMINED EMBODIMENTS

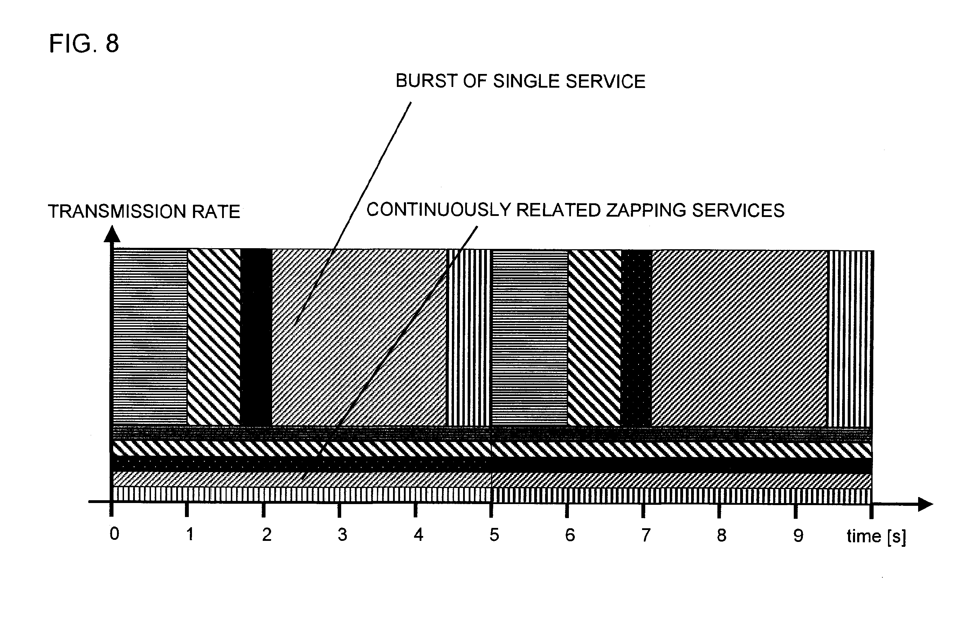

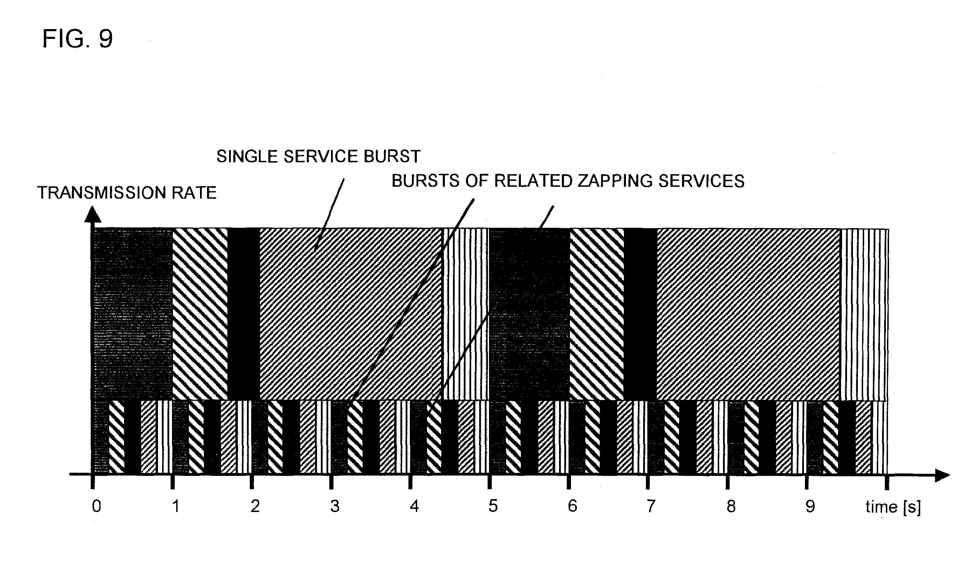

Figs. 8, 9 are diagrams showing an example of the zapping service transmission. Fig. 8 is a diagram showing a case in which a predetermined band is assigned to the zapping service for transmission as a continuous stream. Fig. 9 shows a case in which the zapping service is transmitted as still smaller bursts. The waiting time for the zapping service can be minimized by transmission of a continuous stream. Also, the transmission of the zapping service in burst form (or time slice form) is expected to reduce the terminal power consumption or make it possible to receive another service in the same time slot.

This invention provides a method of generating these zapping services.

(First embodiment)

IP data cast transmission system:

As a transmission system embodying the invention, a method of generating a zapping stream from the DVB-H IP data cast is explained with reference to the drawings.

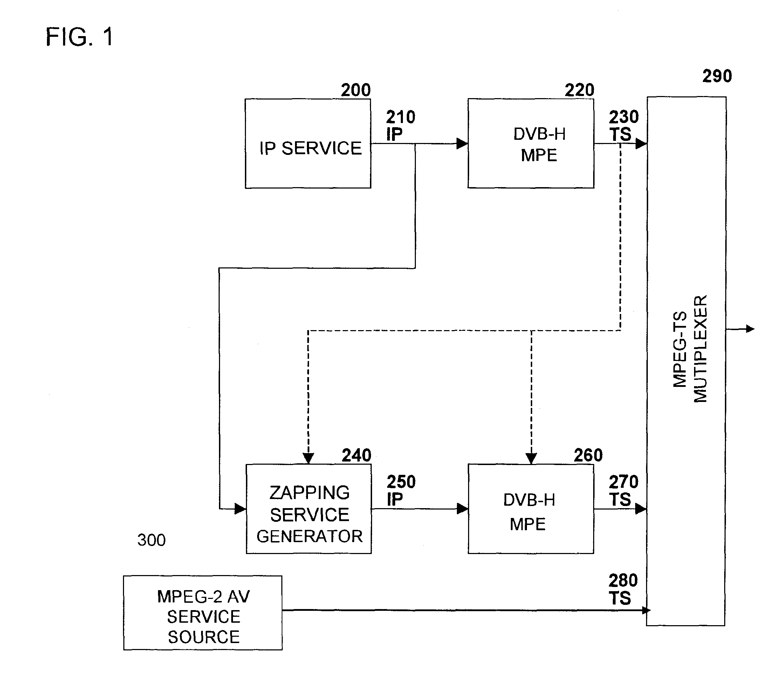

Fig. 1 is a diagram showing an example of the IP data cast transmission system including a zapping service generator for generating the zapping service from the DVB-H IP data cast.

A zapping service generating apparatus 240 and a multi-protocol encapsulator (DVB-H MPE) 260 are added to the DVB-H IP data cast environment configured of an IP service supply unit 200, a DVB-H multi-protocol encapsulator (DVB-H MPE) 220 and a MPEG-TS multiplexer 290.

In this example, one zapping service generating apparatus 240 processes one service stream of the IP streams 210 (including all the services) formed by the IP service supply unit 200.

The DVB-H MPE 260 executes the process of encapsulating the DVB-H multi-protocol and generating a burst of an appropriate time slice.

Also, a system having both DVB-T and DVB-H services further includes a MPEG2 service supply unit 300.

In a typical configuration, a plurality of zapping services each have a dedicated zapping service generating apparatus 240, and all the zapping IP streams 250 generated, after being temporally multiplexed or in parallel or by time, are supplied to the multi-protocol encapsulator (DVB-H MPE) 260. The streams are thus sent out in bursts en masse or at a predetermined rate by being multiplexed in the MPEG TS multiplexer.

It is apparent that basically, the addition of the zapping service generating apparatus 240 requires substantially no correction of the existing infrastructure.

A copy of the IP stream 210 from the IP service supply unit 200 is required to be supplied to the zapping service generating apparatus 240. Thus, a specified service is filtered, and the related zapping service is generated. Then, the IP stream 250 is output. This IP stream is encapsulated into the DVB-H format by the MPE 260 thereby to generate the transport stream 270. This transport stream, like 230, 280, is supplied to the MPEG TS multiplexer 290.

(Modification)

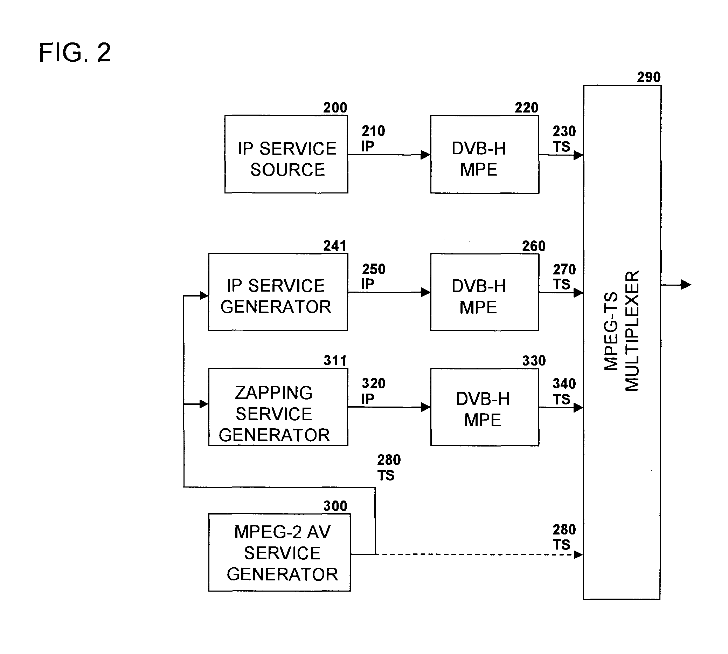

Fig. 2 is a diagram showing an example of the IP data cast transmission system including the zapping service generator for generating the zapping service from TS encoded by MPEG 2 of DVB-T according to the invention.

In this example, the zapping service is generated from the transport stream 280 instead of from the IP stream 210 shown in Fig. 1. The transport stream 280 supplied from the MPEG2 AV service source 300 is encoded from the AV service of MPEG2 providing a standard encoding scheme of the current DVB-T.

This configuration further includes the IP service generator 241 shown in Fig. 2, and both the service and the zapping service can be generated concurrently.

Incidentally, the zapping service of all forms may be sent in bursts as shown in Fig. 8 or continuously as shown in Fig. 9. By transmitting all the data of the zapping service at appropriate timing immediately before the related service bursts, the buffer capacity and the bandwidth can be saved in the MPEG TSMPEG-TS multiplexer 290.

(Second embodiment)

Generation of still image zapping service from AV service:

Next, an example of the zapping service generating apparatus is described.

This embodiment represents an example of the apparatus for generating a zapping stream of still image type from the AV service containing the video/audio data. The zapping service generating apparatus extracts the IP data program of the service selected in advance from all the IP datagrams and outputs the IP datagram of the zapping service related to the service selected in advance.

The zapping service is another service related to the AV service supplied by the service provider. Therefore, the same AV coder is used at the transmitting end, and the same decoder at the terminal.

According to this invention, a multiplicity of decoders are not required in the terminal.

The output of the zapping service generating apparatus is normally supplied to the multi-protocol encapsulator (MPE).

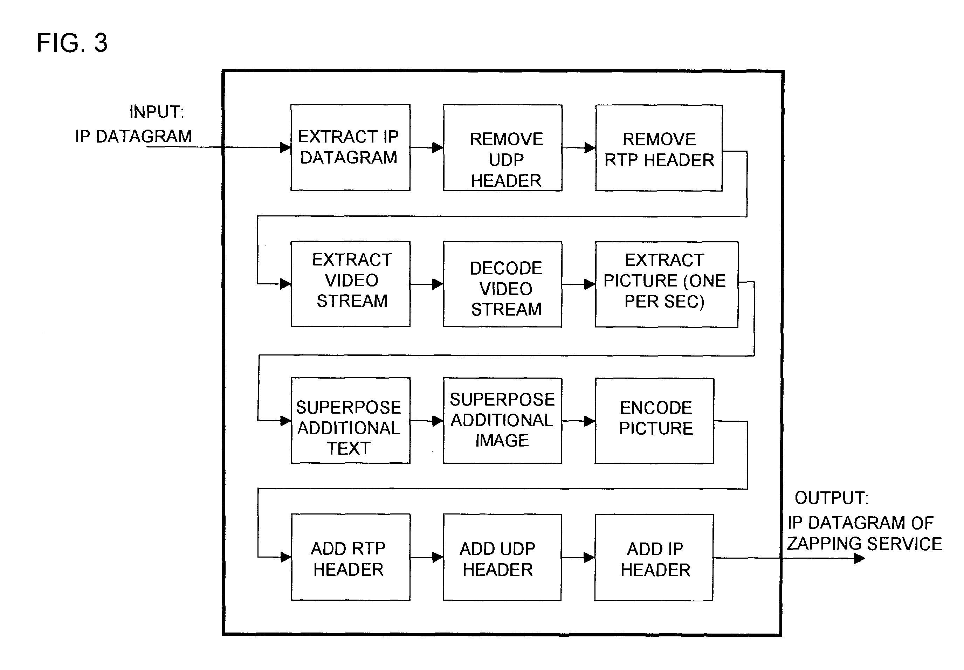

Fig. 3 is a diagram showing the process executed by the zapping service generating apparatus of still image type to supplement the AV service according to the invention.

The operation before generation of the zapping service is explained with reference to Fig. 3.

Process:

Step (1): From the source signal input to the zapping service generating apparatus, one AV service is selected, i.e. the video stream desired to generate the zapping stream is selected.

Step (2): Next, from the IP datagram extracted at step (1), the transport layer protocol (such as UDP) is removed.

Step (3): Further, another transport layer protocol (such as RTP) is removed.

Step (4): Next, the video stream is extracted.

Step (5): The video stream is decoded and a set of the video frames to be used as a still image is retrieved. All the video data or a specified part thereof may be decoded.

Step (6): The still images are updated at the rate of one per second, and therefore from the set of reproduced video frames, one video frame is selected for each second.

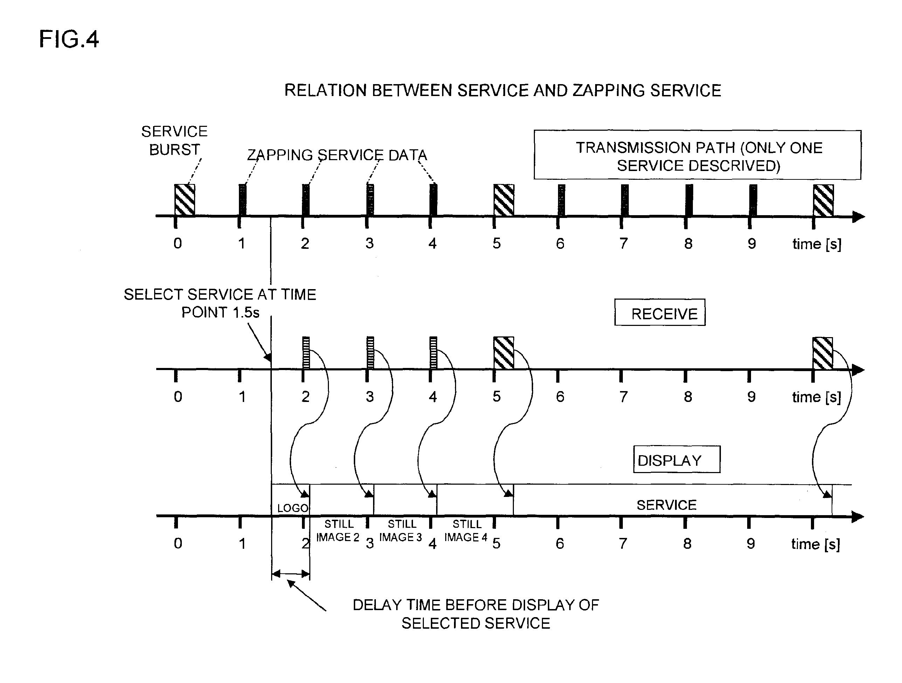

Fig. 4 is a diagram showing the relation between the reception and display of the zapping service data containing the frame thus selected. The remaining frames not selected (not used) are discarded. Instead of selecting the still image as a method of low digitization of the AV service, a compression scheme of high compression ratio can be used to re-encode the complete video stream. Also, the image generated separately as described above can be manually uploaded.

Step (7): As required, as an option, the text information is superposed on or buried in a still image. An example of the text information is "XX seconds before the service starts". The text information can be extracted from the ESG (electronic service guide) or the delta T parameter of the related service. The text is inserted by being fixedly arranged in the zapping stream generating apparatus. The superposition of the text, for example, increases the complication of the still image into a larger still image data. In place of the text, a picture object can be used as an efficient form.

Step (8): As required, as an option, the picture object is superposed or buried. An example of the picture object is a TV station banner of up to the full screen size or the picture object of advertisement. It may alternatively be a process bar indicating the time elapsed or another picture image visualizing the elapsed time. The picture object is generated from electronic service guide (ESG) or stored in advance. The picture object can be inserted by being fixedly arranged in the zapping stream generating apparatus. For example, the picture object is superposed as a part of the still image. Also, the layout position can be fixed.

Step (9): All the still images are encoded by a parameter of a high compression ratio different from the parameter of the input AV stream. All the video streams generated from the zapping service finally include one still image.

Step (10): Next, the transport layer protocol (say, RTP) is added.

Step (11): Further, another transport layer protocol (say, UDP) is added.

Step (12): The network layer protocol (say, IP) is added.

Step (13): As a result, the IP datagram continuously containing the zapping service (supplementing the selected AV service) is output.

The still image may be accompanied by the audio data of low data rate useful for the user in zapping operation. In this case, the audio conversion process can be apparently executed in a similar procedure as the image encoding.

In the case where the service burst starting time is transmitted by the zapping service burst, the next step (14) may be added.

Step (14): The generation and insertion of the control information IP datagram into the IP datagram stream.

Specifically, the temporal relation between the zapping service and the related AV service is sent as control information, and preferably indicated in the payload of the control information IP datagram.

Also, the temporal relation may be inserted into the control information IP datagram taking $\Delta t$ indicating the interval at which the time slices are sent out, for example, and the offset due to the delay of the zapping service generating apparatus into consideration.

(Third embodiment)

Method of generating the service from MPEG2 or related zapping service:

Fig. 2 is a diagram showing an example in which a multiplexer is shared by the IP service (IPDC in DVB-H) and AV service (DVB-T) encoded by MPEG2 according to an embodiment of the invention.

The zapping service is generated from the transport stream 280 instead of from the IP stream 210. The MPEG2 AV service supply unit 300 encodes the AV service by MPEG2 encoding constituting the standard encoding method with the prevailing DVB-T. Incidentally, the transport stream encoded by MPEG2 may of course be supplied from an external device.

According to this embodiment, the service and the zapping service are both generated concurrently by the IP service generator 241 and the zapping service generating apparatus 311 shown.

The output of the MPEG2 AV service 300 is supplied to a common multiplexer 290 through the IP services 210, 250.

In this configuration, the IP service 250 and the zapping service 320 thereof are generated from the transport stream by the DVB-H service generating apparatus 241 and the DVB-H zapping service generating apparatus 311, respectively.

Generation of IP service:

An example of the procedure for generating the video service 250 of the IP base processed by the IP service generating apparatus 241 is described below.

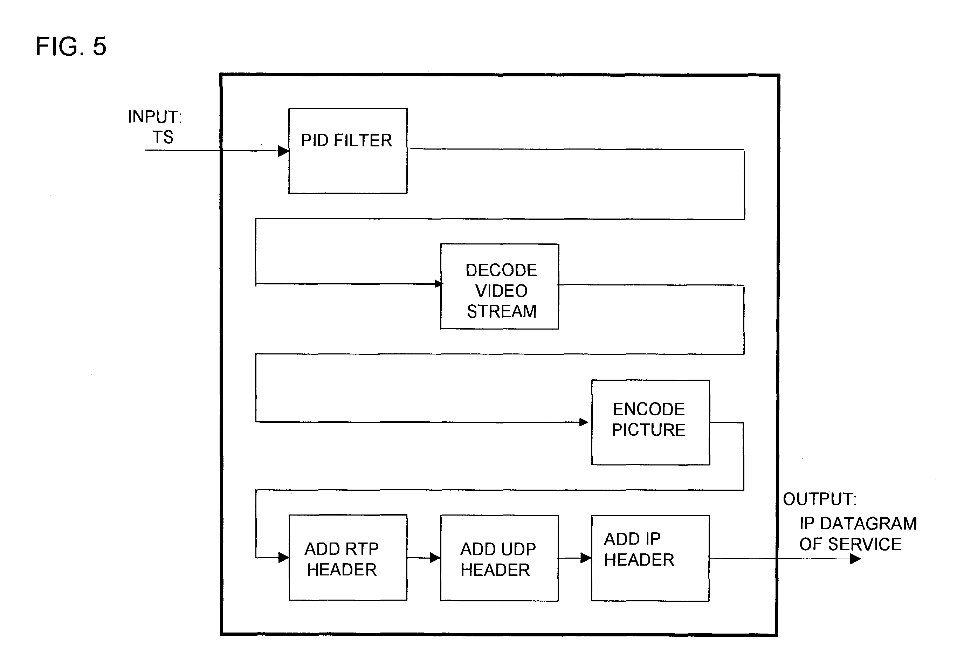

Fig. 5 is a block diagram showing an example of the apparatus for generating the video/audio IP service from the AV service (audio/video service) encoded by MPEG2.

Fig. 5 contains the description of only the processing of the video stream for simplifying the explanation. The audio stream encoded by MPEG2 is also processed by a similar method.

Process:

Step (1): One AV service is selected from the source signal having an appropriate PID input to the service generating apparatus. In other words, the TS packet including the video stream encoded by MPEG2 which is desirably used to generate the IP base service is filtered and extracted.

Step (2): The video stream is decoded, and the video frame at 25 or 29.9 frames/second is generated.

Step (3): The video frame reproduced with an appropriate format such as AVCH.264 or MPEG-4, for example, is encoded again.

Step (4): Next, the transport layer protocol (say, RTP) is added.

Step (5): Further, another transport layer protocol (say, UDP) is added.

Step (6): The network layer protocol (say, IP) is added.

Step (7): As a result, the IP datagram including the IP base service is output. The audio stream is also processed similarly.

Next, the generation of the zapping service is explained.

Generation of zapping service:

An example of the procedure for generating the zapping service of the IP base processed by the zapping service generating apparatus 311 is described below.

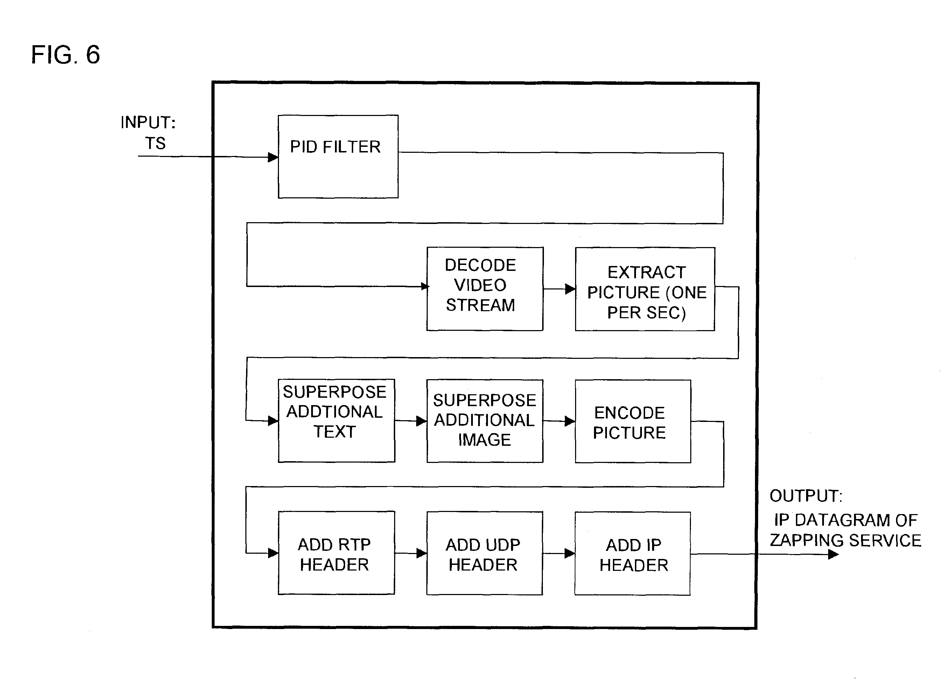

Fig. 6 shows a zapping service generating apparatus for the still image-type zapping service to supplement one AV service.

Process:

Step (1): One AV service is selected from the source signal having an appropriate PID input to the service generating apparatus. In other words, the TS packet including the video stream encoded by MPEG2 which is desirably used to generate the IP service is filtered and extracted.

Step (2): The video stream is decoded, and a set of video frames to be used as a still image is reproduced. The entire video stream or only a specified part thereof may be decoded.

Step (3): In order to update the still image at the rate of one frame per second, the reproduced video frames is selected at the rate of one per second from a set of video frames. The remaining frames not selected (not used) are discarded. Incidentally, as a method of low digitization of the AV service, instead of selecting the still image, the complete video stream may be encoded again by the compression scheme higher in compression ratio. Also, as described later, an image prepared separately may be manually uploaded.

Step (4): As required, as an option, the text information is superposed on or buried in the still image. An example of the text information is "XX seconds before starting the service". The text information can be extracted from $\Delta T$ parameter of the ESG (electronic service guide) or the related service. The text layout may be fixed on the zapping stream generating apparatus. For example, the text superposition increases the complication of the still image, and the size of the still image data is further increased. In place of the text, a figure object may be used as a more efficient format.

Step (5): As required, the figure object is superposed or buried as an option. An example of the figure object is a TV station banner of up to the full screen size or the figure object of advertisement. It may alternatively be a process bar indicating the time elapsed or another figure image visualizing the elapsed time. The figure object is generated from ESG (electronic service guide) or stored in advance. The figure object layout can be fixed in the zapping stream generating apparatus. For example, the figure object is superposed as a part of the still image.

Step (6): All the still images are encoded by an appropriate encoding method (appropriate format such as AVCH. 264 or MPEG-4 format). All the video streams generated from the zapping service finally include one still image.

Step (7): Next, the transport layer protocol (say, RTP) is added.

Step (8): Further, another transport layer protocol (say, UDP) is added.

Step (9): The network layer protocol (say, IP) is added.

Step (10): As a result, the IP datagram continuously containing the zapping service (supplementing the selected AV service) is output.

The still image may be accompanied by the audio data of low data rate useful for the user in zapping operation. In this case, the audio conversion process can be apparently executed in a similar procedure as the image encoding.

In this way, by generating and encoding the IP service 250 and the zapping service 320 of the IP base at the same time, the delay between them can be reduced.

(Modification)

Size reduction of still image zapping stream:

The size of the channel bandwidth consumed by the zapping service explained in the second and third embodiments is crucial. To simplify the package, a predetermined channel bandwidth or time slice is desirably assigned to the zapping service.

For this purpose, all the zapping streams are required to be compressed into the same stream size independent of the complication of the still image transmitted.

Especially, in the case where the still image stream consumes too much band, the size of the still image stream is required to be reduced.

In the case under consideration, an explanation is given about a method of reducing the data size of the still image used in the zapping service which is adaptable to the corresponding portions of the second and third embodiments. A similar effect is achieved also by combining an arbitrary one or a plurality of the methods.

(1) No small elements are used.

The text style information on the zapping service or the service are buried in the still image before encoding and the text is synthesized as a part of the still image.

The buried text thus causes the complication of the still image to increase, and the encoded still image causes the size of the zapping stream to increase. As the text buried to reduce the amount of increase in complication, the elements small in shape such as lowercase letters or words are avoided. This also improves the readability.

(2) Separate transmission of text

As a modification of step 7 in the generation process according to the second embodiment, the text data for use in superposition can be transmitted separately from the still image. At the receiving end, the still image and the related text are formed with a layout unique to the receiver. To simplify the assemblage, the text is desirably transmitted by a widely-used format such as ASCII, HTML or a format used for the electronic service guide (ESG).

(3) Encode by cutting out a part of image.

For some contents, display of a part of the image may be sufficient. In the case where the encoding result is excessively large as a result of preliminary encoding, a part of the original image such as the central portion of the image alone is cut out and encoded again. At the receiving end, it is restored to the original size and displayed. By doing so, the code amount can be further reduced.

(4) Select an image not equidistant but high in compression efficiency.

As a still image used for the zapping service, the still image located at a specified position in the AV service (such as the image frame at regular time intervals) is not required to be extracted and used.

The image can be selected from a series of frames "located in the vicinity of the accurate position at the appropriate timing".

From several frames before or after those accurate in timing, for example, the frame having the best coding efficiency is selected to configure the minimum zapping stream.

Criterion for selection: An image low in complication that can be encoded with high image quality in a specified stream size.

(5) Conversion to low-resolution image

The still image of the CIF resolution (356 x 288 pixels per frame), for example, is encoded with the QCIF resolution (176 x 144 pixels per still image).

(6) Reduction in number of colors

The code amount is adjusted by reducing the number of colors to monochrome.

(Second modification)

A modification other than the reduction in the zapping stream is explained below.

(1) Generation of zapping service from non-AV service

In the examples described above, the zapping service is generated from the AV service. In place of the AV service, however, an arbitrary non-AV service can be used to generate the zapping service. For example, the zapping service may be generated from the file service or other types of data services requiring high-speed access.

(2) Generation of zapping service from download service

The zapping service may be generated from the download-type service instead of from the streaming-type service. The file download or other types of data download (the game, video clip, application software or the latest-version firmware of terminal) are some examples.

A set of still images is generated in advance, encoded as a streaming AV service, packetized as UDP, RTP or IP and uploaded and accumulated in the generating apparatus. They are then inserted into the IP stream and sent out in a predetermined burst cycle.

(3) Manual insertion of still image

The zapping service can be generated from an object inserted manually and arbitrarily instead of from the AV service. The data is not necessarily of IP packet type. The data of general format of an object, for example, can be supplied to the portion for "Select one still image per second" shown in Fig. 3.

(4) Method of using the zapping service as advertisement to what the desire to view

In the pay-per-view TV service, for example, the zapping service is displayed in still images not scrambled. These still images, though reduced in resolution and updated only once per second, have the effect of advertisement to promote the viewing of the pay-per-view TV service scrambled.

In this method of use, the still image may further include the important parameters (such as the description of contents, starting time, program length, rebroadcast time, price, etc.) of the pay-per-view TV service.

(Fourth embodiment)

Additional insertion of IP datagram of control information:

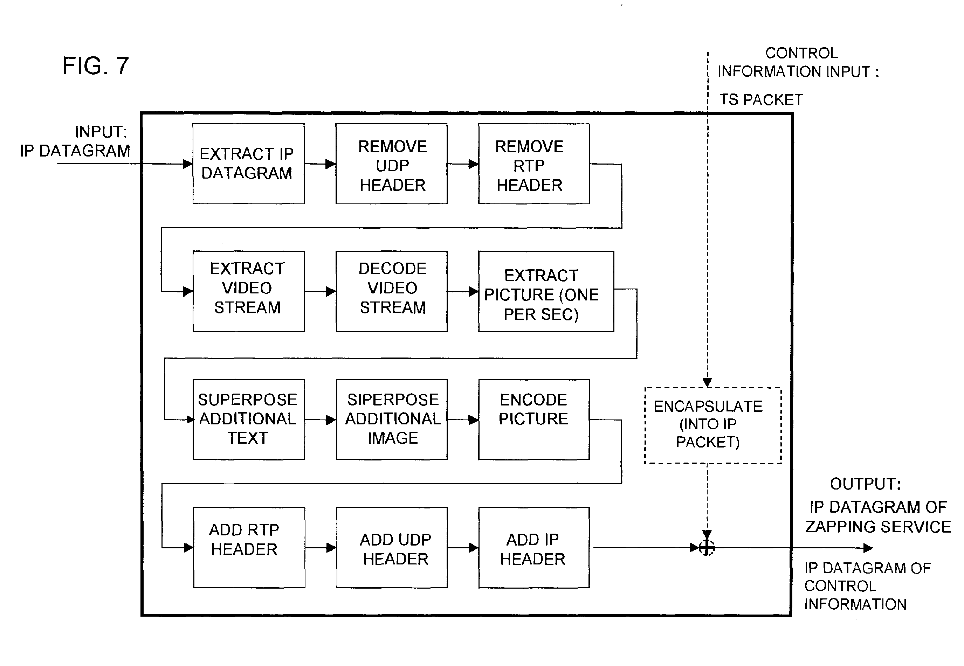

The zapping service generating apparatus according to this embodiment, as shown in Fig. 7, further has a control information input of transport stream packet format containing the service-related control information. As indicated by dotted line in Fig. 1, the packet (copy of the transport stream 230) including these control data is supplied to the zapping service generating apparatus 240 or the DVB-HMPE 260, so that the control information data is extracted and processed as required.

As an example, in the zapping service generating apparatus 240, the Δt information indicating the timing to send out the time slice of the related main service is retrieved, and converted to the IP datagram based on the control information constituting a value considering the relation between the transmission time of the main service and the zapping service. Thus, the "IP datagram of control information" is inserted in the IP stream of the zapping service.

Therefore, the receiver, after receiving the zapping service before receiving the bursts of the main service, can know the timing when the power for the receiving processing unit can be turned off, thereby making it possible to further suppress the power consumption.

Also, as an example of the process in DVB-HMPE 260, $\Delta t$ is extracted and can be used for the multiplex timing (the transfer timing to the MPEG TS multiplexer) of the zapping service.

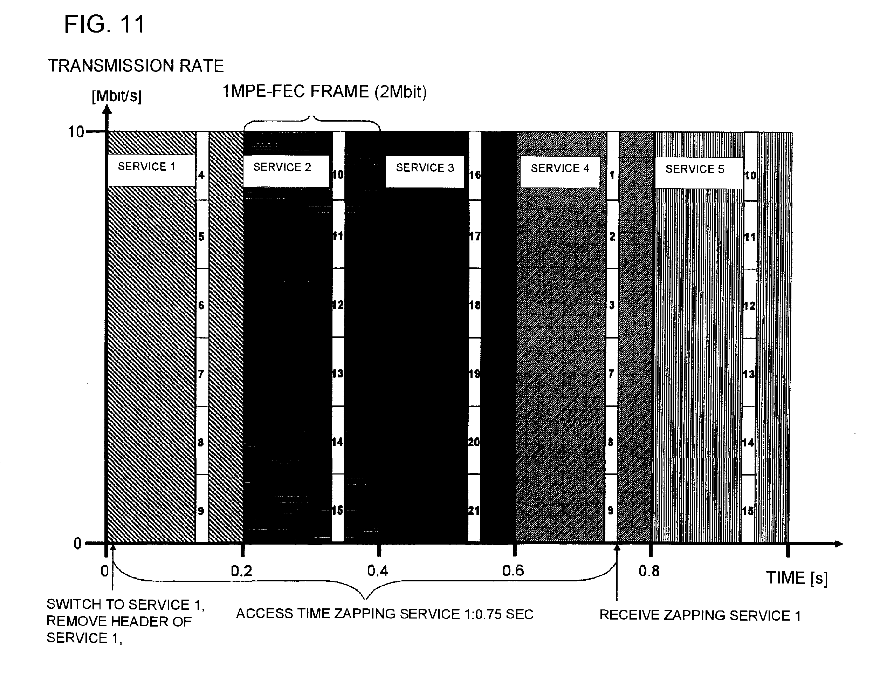

An example in which a plurality of zapping streams are added to the MPE-FEC frame is explained. Fig. 11 is a diagram showing a plurality of zapping streams added to the MPE-FEC frame. With regard to Fig. 11, the following contents are established:

1. Data rate with continued service: 384 kbps
2. MPEG-FEC frame = 2 Mbit
where 1.8 Mbit is assigned to the service, and 0.2 Mbit to still images. In other words, 10 % of the MPE-FEC frame is assigned to still images.
3. Burst time: 1.8 Mbit/384 kbps = 4.6875 seconds (about 4.2 seconds)
4. Service count: 21 services * 384 kbps = 8 Mbps bandwidth
5. Burst period: 4.2 seconds/21 services = 0.2 seconds/service
6. Six still images can be inserted in each frame. Each still image being 25 kbit, 6 *25 kbit = 150 kbit/frame can be inserted.

In this case, six still images are employed for the reason that the total number of services is 21, of which three services are provisionally not supplied with the zapping service and the bursts thereof in proximity to each other. Thus, 18 (= 21 - 3) still images are temporarily required and the following relation is acquired.

18 still images / three approaching services = six still images (per service) = six still images (per MPR-FEC frame)

Based on these, the memory capacity per frame is not more than 2 Mbit. In other words, 1.8 Mbit (services) + 150 kbit (6 still images) < 2 Mbit

Incidentally, the access time to the service or still image is shown in Fig. 11. If the head portion of the desired service cannot be received, it is 0.75 seconds.

(Fifth embodiment)

Method of configuring MPE-FEC frame including zapping stream:

According to this embodiment, an example of the method of configuring the MPE-FEC frame including the zapping stream is explained in detail.

Configuration of transmission equipment:

Fig. 1 shows a configuration in which the zapping service generating apparatus is added to the MPEG-TS multiplexer currently used.

This is already explained in detail in the first embodiment. The blocks 240, 260 are used for generation and multiplexing of the zapping services. The other blocks are used for the IP data transmission (even without the zapping service) by the normal DVB-H. The zapping stream is transported on the MPEG2-TS.

This MPEG2-TS is multiplexed with the MPEG2-TS containing the other normal AV services by the MPEG-TS multiplexer 290. The zapping stream is generated at IP level, encapsulated as MPE at 260 and incorporated into TS270 of MPEG2. This method requires a dedicated apparatus (MPE, TS generator or MPEG-TS multiplexer (the time slice device also required in the case where the time slice is carried out)) for producing the TS of the zapping service.

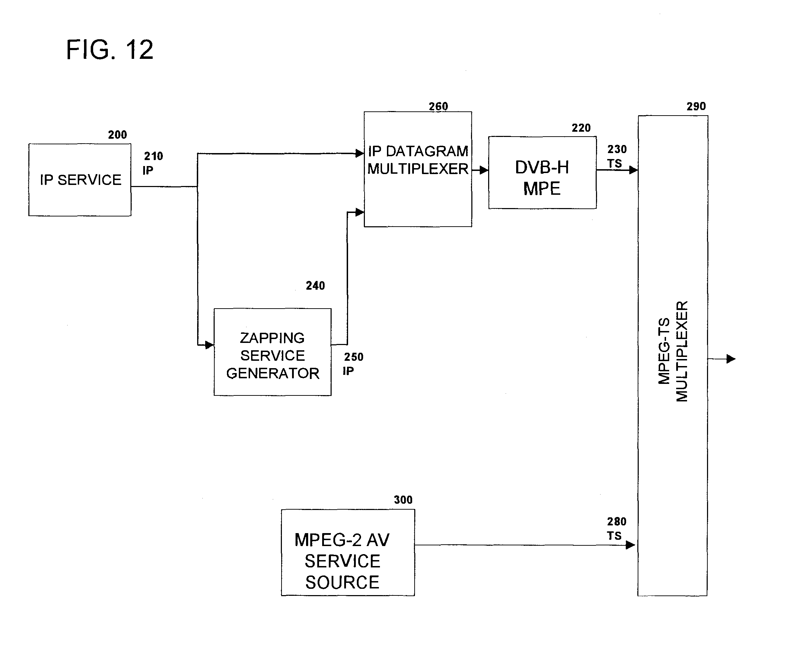

Fig. 12 shows an example of another simple configuration. The zapping service generating apparatus 240 shown in Fig. 12 generates and updates a zapping stream. The output 250 thereof is added to the original IP stream 210 and input to the multiplexer 260 of a simple configuration. The MPE encapsulator of DVB-H inputs the normal service and the zapping service into the application data table.

Not only the IP address of the normal service is input to the application data table but also the IP address of the zapping service may be input to the application data table.

Arrangement in application data table:

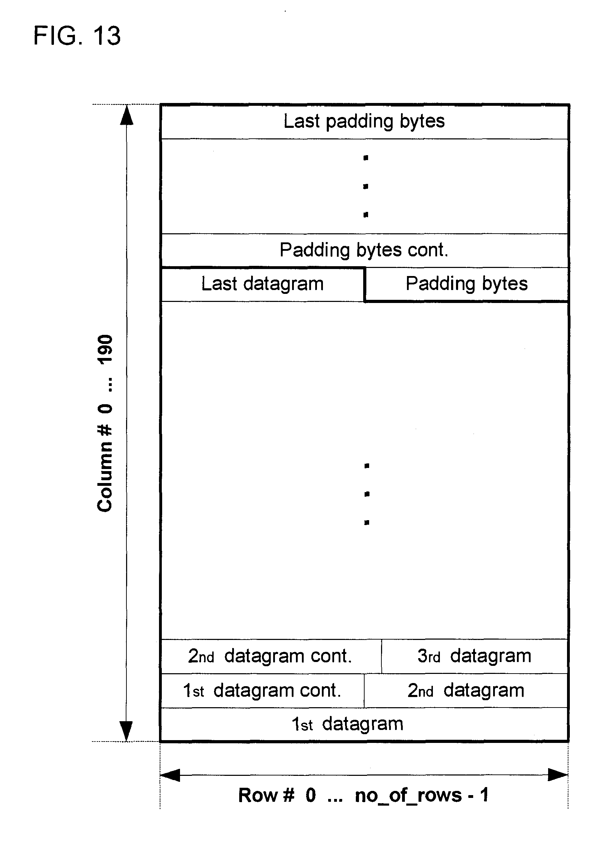

Fig. 13 shows the layout of the application data table described in the DVB-Data broadcasting specification (ETSI EN3011192, v.1.4.1).

The application data table is configured of rows and columns. Each region represents one byte and is retrieved from the IP datagram. The IP datagrams including the 1st IP datagram, 2nd IP datagram and so on are arranged in that order in this table. Normally, only the IP datagram streams of one or a few services are arranged in this table but no zapping stream. All the services are distinguished by the starting IP address thereof. If the application table is not filled up, the padding bytes are filled.

In the MPE-FEC frame, several regions of the application data table can be assigned for transporting the zapping streams of the IP base.

In Fig. 13, for example, the 3rd IP datagram may contain the zapping stream of one still image for the service xyz. The regions not in use are buried with the padding bytes. In the process, it should be noted that the zapping services (like the IP datagram) can be distinguished by the starting IP address.

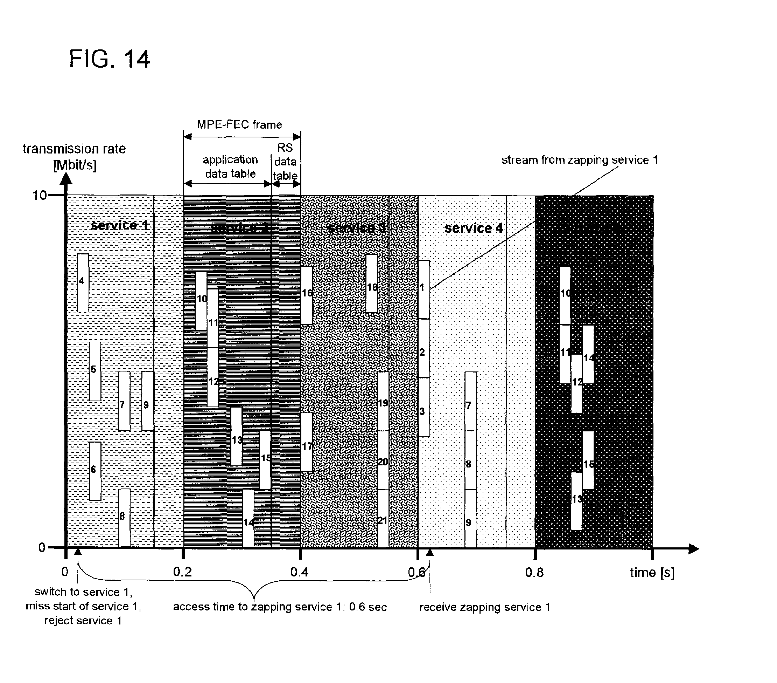

A method of selecting the zapping stream to be sent out from all the zapping streams generated is explained with reference to Fig. 14.

The zapping stream corresponding to the service burst is not transmitted in the case where the service burst transmission time is imminent (in the case where the corresponding service burst is to be transmitted within the next one second, for example). Specifically, the data of the corresponding zapping stream not transmitted is not arranged in the application data table and not transmitted. Thus, the band can be saved.

Fig. 14 shows a typical case of the 21 burst services. The 18 zapping streams designated by numerals 4 to 21 are selected and distributed, six each, among the three (= 21 - 18) continuous application data tables. The time frame of 0 to 0.6 seconds between the services 1, 2, 3 contains the services 1, 2, 3 themselves and no zapping services for the services 1, 2, 3. In the following time frame of 0.6 to 1.2 seconds, the services 4, 5, 6 are transmitted. This time frame is not required to contain the related zapping services. Thus, only the zapping services 1, 2, 3, 7, 8, 9, 10 are included in the time frame when the services 4, 5, 6 are transmitted. In this example, the access time to all the services and zapping services can be set to about 0.6 seconds at maximum. Nevertheless, the other many delays of the end-to-end system are not taken into consideration.

With regard to an arbitrary normal stream, the zapping streams 1 to 21 are identified and filtered at a terminal by the IP addresses thereof. They may be assigned by the IP address zapping service generator.

Assignment of IP address of zapping stream:

Now, a method of managing the starting and ending IP addresses which can be easily incorporated into the DVBH MPE apparatus is described in detail.

Table 1 shows an example of the input fields set in the DVBH MPE apparatus.

Table 1: Example of input fields set in DVBH MPE apparatus

| Burst No. | Assigned MPE-FEC frame memory size | Starting IP address for service in burst | TS packet PID of application data table in burst | TS packet PID of RS data table in burst | Service transfer rate |
|---|---|---|---|---|---|
| 1 | 2 Mbit | 10.10.100.01 | 0x501 | 0x502 | 256 kbps |
| 2 | 2 Mbit | 10.10.100.02 | 0x601 | 0x602 | 256 kbps |
| 3 | 2 Mbit | 10.10.100.03 | 0x701 | 0x702 | 256 kbps |
| 4 | 2 Mbit | 10.10.100.04 | 0x801 | 0x802 | 256 kbps |
| ... | ... | ... | ... | ... | ... |
| 40 | 2 Mbit | 10.10.100.40 | 0x4001 | 0x4002 | 256 kbps |

In this example, the bandwidth assigned per channel is 10 Mbps. The MPE-FEC frame size is a constant 2 Mbit for all bursts, and a maximum of the 40 services can be all encapsulated, and the burst transmission period is as follows:

$$(40 \text{ services} \times 2 \text{ Mbit per service}/10 \text{ Mbps}) = 8 \text{ sec}$$

The 40 services in the aforementioned example are determined from 10.10.100.01 to 10.10.100.40 of the IP sources.

Table 2 shows another example of the input fields set in the DVBH MPE apparatus. In DVB-H, as defined in (ETSI EN301192, v.1.4.1), one or more services can be included in one MPE-FEC frame. In other words, one burst can include one or more services.

Also in this example, the bandwidth assigned from the channel is 10 Mbps, and like in the aforementioned example, the MPE-FEC frame size is constant 2 Mbit for all the bursts. However, one burst includes two services, and 1 Mbit is assigned for each service.

A maximum of 40 services can be all encapsulated, and the burst transmission period is as follows:

$$(40 \text{ services x 1 Mbit per service/10 Mbps}) = 4 \text{ sec}$$

Table 2: Another example of input fields set in DVBH MPE apparatus

| Burst No. | Assigned MPE-FEC frame memory size | Starting IP address of service in burst | TS packet PID of application data table in burst | TS packet PID of RS data table in burst | Service transfer rate |
|---|---|---|---|---|---|
| 1 | 1 Mbit<br>1 Mbit | 10.10.100.01<br>10.10.100.02 | 0x501 | 0x502 | 256 kbps<br>256 kbps |
| 2 | 1 Mbit<br>1 Mbit | 10.10.100.03<br>10.10.100.04 | Ox601 | 0x602 | 256 kbps<br>256 kbps |
| 3 | 1 Mbit<br>1 Mbit | 10.10.100.05<br>10.10.100.06 | 0x701 | 0x702 | 256 kbps<br>256 kbps |
| 4 | 1 Mbit<br>1 Mbit | 10.10.100.07<br>10.10.100.08 | 0x801 | 0x802 | 256 kbps<br>256 kbps |
| ... | ... | ... | ... | ... | ... |
| 20 | 1 Mbit<br>1 Mbit | 10.10.100.39<br>10.10.100.40 | 0x4001 | 0x4002 | 256 kbps<br>256 kbps |

The 40 services in this example are determined from 10.10.100.01 to 10.10.100.40 of the IP services

In Table 2, the IP addresses of the zapping services in IP layer are not different. All the zapping services share the same IP address with the original service. The zapping service and the original service are distinguished from each other in an upper layer than the IP layer (the accurate position in the protocol is not explained).

In this case, the zapping service and the original service are not distinguished in the IP layer. Then, it is not necessary that the DVBH MPE input field from one MPE-FEC frame to another should be dynamically reconstructed. Also, the input field can be realized with a fixed value and, therefore, revising the DVBH-MPE apparatus is not needed.

Table 3 shows another example of the input field set in the DVBH MPE apparatus. In this example, as in the aforementioned one, the bandwidth assigned from the channel is 10 Mbps and the MPE-FEC frame size is a constant 2 Mbit for all the bursts.

In this case, each burst includes one service and one zapping service. For example, 1.8 Mbit of the 2 Mbit is assigned to the services, while the remainder is assigned to the zapping service.

A maximum of 40 services can all be encapsulated, and the transmission period is as follows:

$$(40 \text{ services x 1.8 Mbit per service/10 Mbps}) = 7.2 \text{ sec}$$

Document (ETSI EN301192, v.1.4.1) stipulates that a multiplicity of services are included in the same MPE-FEC frame. According to this stipulation, the zapping stream can be easily inserted in the MPE frame as shown in Table 3.

The 40 services in the example shown above are determined from 10.10.100.01 to 10.10.100.40 of the IP source.

The 40 services in Table 3 are derived from 10.10.100.01 to 10.10.100.40 of the IP source. The 40 zapping services in the aforementioned example are all assigned the same starting IP address (10.10.101.01) and supplied from the zapping service generator.

Table 3: Example of input field set in DVBH MPE apparatus according to the invention

| Burst No. | Assigned MPE-FEC frame memory size | Starting IP address of burst service | TS packet PID of application data table in burst | TS packet PID of RS data table in burst | Service transfer rate |
|---|---|---|---|---|---|
| 1 | 1.8 Mbit<br>0.2 Mbit | 10.10.100.01<br>10.10.101.01 | 0x501 | 0x502 | 256 kbps<br>25 kbps |
| 2 | 1.8 Mbit<br>0.2 Mbit | 10.10.100.02<br>10.10.101.01 | 0x601 | 0x602 | 256 kbps<br>25 kbps |
| 3 | 1.8 Mbit<br>0.2 Mbit | 10.10.100.03<br>10.10.101.01 | 0x701 | 0x702 | 256 kbps<br>25 kbps |
| 4 | 1.8 Mbit<br>0.2 Mbit | 10.10.100.04<br>10.10.101.01 | 0x801 | 0x802 | 256 kbps<br>25 kbps |
| ... | ... | ... | ... | ... | ... |
| 20 | 1.8 Mbit<br>0.2 Mbit | 10.10.100.40<br>10.10.101.01 | 0x4001 | 0x4002 | 256 kbps<br>25 kbps |

Zapping stream distribution in zapping service generating apparatus

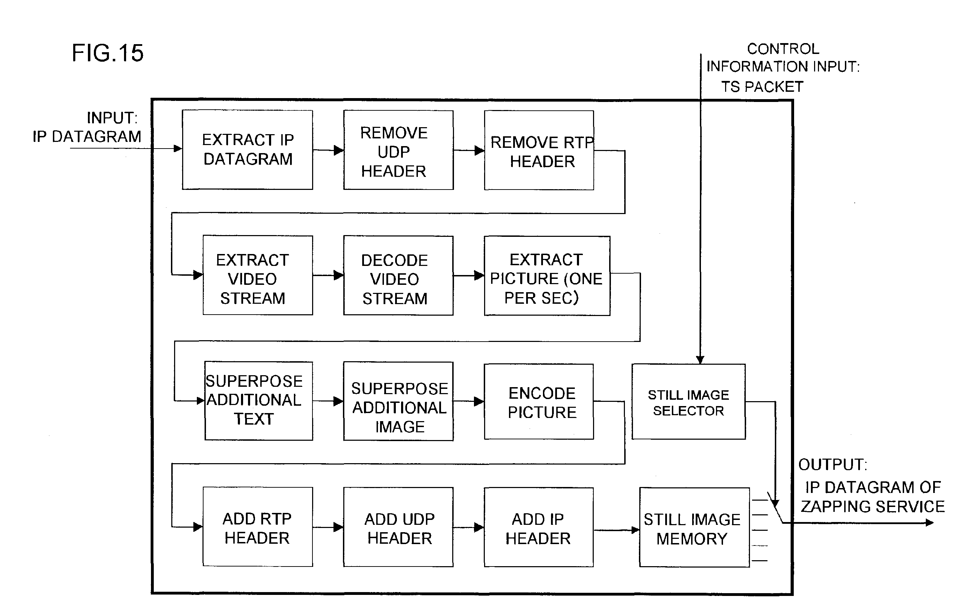

The proper distribution of the zapping streams in the zapping service generating apparatus is explained. The zapping service generating apparatus shown in Fig. 15 in which the still image memory and the still image selector shown in Fig. 7 are expanded is explained. In the most simple package of the zapping service generating apparatus, the "adding IP header" block continuously outputs all the zapping streams to the "still image memory".

The "selecting still image" block selects the still image in accordance with the "temporal optimum" principle (See modification (4) of the third embodiment: "The images used not equidistant but having high compression efficiency are selected"), and the particular still image is output to the DVB-H MPE apparatus at the data rate assigned to the DVB-H MPE apparatus. This corresponds to the IP output 250 shown in Fig. 12. This IP datagram is multiplexed by the IP datagram multiplexer 270 (normally realized by a simple IP switch, etc. available on the market).

In a more sophisticated package of the zapping service generating apparatus, the generating apparatus continuously outputs the zapping streams as described above. The zapping streams transmitted to near destinations and related to the service, however, are stopped by the still image selector to save the data rate. Since the speed at which the service is found is not affected, these zapping streams are not required to be transmitted.

Fig. 14 shows a typical environment in which 18 out of 21 zapping streams are distributed at random in the application data table of the MPE-FEC frame. Since the normal service burst is transmitted to a very near destination, the still image selector stops sending out and discards the zapping streams 1, 2 and 3, and then, for the same reason, discards the zapping streams 4, 5 and 6.

The zapping process is accompanied by a substantially seamless transfer between the services, and therefore the accurate temporal relation to the services in the burst is required. Especially in the case where the zapping service is configured of a copy at a low data rate of the original service but has an entry point nearer to the zapping service than to the normal service burst, i.e. in the case where the predictable frame such as the P frame or the B frame follows the still image of the I frame format, the temporal following of the service is required. The implementation of the temporal following can be achieved by supplying the TS stream to the TS control information input unit of the zapping service generating apparatus.

The evaluation and the temporal relation are not related to the intent of the invention and therefore not described in detail.

The distribution method described above is versatile in that the conditions such as the sequence of the still images and the period of repetition are not limited. Also, all the IP datagrams of the same zapping stream are not required to be included in the same application data table, and these IP datagrams can be arranged on two or more application data tables.

This indicates that (in the case where the channel is changed by the user) all the bursts including all the services in one period can be received by the terminal and held in the memory. In this example, the terminal requires a memory of 10 Mbps x 8 sec = 10 Mbyte.

The transmission data rate of the zapping service generating apparatus, however, can never exceed the data rate assigned to the DVB-H MPE apparatus for the zapping service.

The package of the terminal for the zapping method described above is simple. From the moment when the channel is changed (i.e. when the user pushes the program channel key of the terminal), all the bursts are received and all the streams and the zapping streams are stored so that the received services and the program channel numbers are correlated to each other. The zapping stream related to the selected channel is read from the memory, decoded and displayed. In the case where the complete service burst of the selected service can be used in the memory, it is decoded and displayed. In the case where the terminal memory is in shortage, selection is possible. In other words, after extracting the zapping stream, the service bursts of the program channels not substantially viewed are discarded and only the zapping stream is stored.

INDUSTRIAL APPLICABILITY

This invention is applicable to the transmission system of the digital data broadcasting.

**Claims**

1. An IP data cast transmission system comprising:

   an IP service supply unit;
   a first multi-protocol encapsulator operable to encapsulate the IP service into TS and an MPEG-TS multiplexer,
   a zapping service generating apparatus; and
   a second multi-protocol encapsulator operable to encapsulate the zapping service,

   wherein the zapping service generating apparatus, after generating a zapping service stream from the IP stream supplied by the IP service supply unit, encapsulates the zapping service stream by the second multi-protocol encapsulator, and the MPEG-TS multiplexer transmits by multiplexing the output signal of the first multi-protocol encapsulator and the second output signal.

2. A zapping data generating apparatus **characterized by** a method for generating the zapping data, the method comprising:

   IP datagram extraction step for selectively extracting one service from the input IP datagram;
   first protocol removing step for processing the first protocol from the extracted IP datagram;
   second protocol removing step for processing the second protocol;
   video stream extraction step for extracting the video stream subsequently;
   video stream decode step for decoding the extracted video stream;
   picture extraction step for extracting the proper portion from the decoded image data;
   second protocol adding step for processing the second protocol;
   first protocol adding step for processing the first protocol; and
   IP processing step for processing the IP protocol.

3. A zapping data generating apparatus according to claim 2, wherein the method further comprises between the picture extraction step and the second protocol adding step:

   text superposing step for superposing the text data as required, and
   object superposing step for superposing the objects such as figures as required.

4. A zapping data generating apparatus according to claim 2 or 3, wherein the picture extraction step extracts a still image at the rate designated in advance.

5. A zapping data generating apparatus according to claim 2 or 3, wherein the picture extraction step extracts one video frame per second from the video frames reproduced.

6. A zapping data generating apparatus according to claim 2 or 3, wherein the picture extraction step extracts an image low in complication degree capable of being encoded with a high image quality within a defined stream size.

7. A zapping data generating apparatus according to claim 2 or 3, wherein the picture extraction step converts the extracted video frame into a data still lower in resolution.

8. A zapping data generating apparatus according to claim 2 or 3, wherein the picture extraction step cuts out a part of the extracted video frame and converts it into the data different in image size.

9. A zapping data generating apparatus according to claim 3, wherein the step of superposing the text is replaced by a step of superposing the information indicating the process before starting the service.

10. A zapping data generating apparatus according to claim 3, wherein the object superposing step superposes the figure objects of the TV station banner or the advertisement to the full screen size or the other figure image objects of the process bar indicating the elapsed time or the visualized elapsed time.

11. A zapping data generating apparatus according to any one of claims 2 to 10, wherein the method further comprises the step of generating the transmission time information of the burst of the service related to the payload or the control information IP datagram including the corrected value thereof and inserting the generated control information IP datagram into the IP datagram stream generated in claims 2 to 7.

12. An IP data cast transmission system comprising:

an MPEG 2 AV service source operable to supply a transport stream (TS) including the AV service, an IP service generator operable to generate the streams of IP base from the TS, and a first multi-protocol encapsulator for MPE encapsulation, and
a zapping service generating apparatus operable to generate the zapping service stream from the TS, and the second multi-protocol encapsulator operable to encapsulate the zapping service,

wherein the MPEG-TS multiplexer multiplexes and transmits the output signal of the first multi-protocol encapsulator and the second output signal.

13. A zapping data generating apparatus **characterized by** a method for generating the zapping data, the method comprising:

packet extraction step for extracting the video stream from the transport stream (TS) including the input AV service;
video stream decode step for decoding the extracted video stream;
picture extraction step for extracting the proper portion from the decoded image data;
second protocol adding step for processing the second protocol;
first protocol adding step for processing the first protocol; and
IP processing step for processing the IP protocol.

14. A zapping data generating apparatus according to claim 13, wherein the method further comprises:

packet extraction step for extracting the video stream from the transport stream (TS) including the input AV service;
video stream decode step for decoding the extracted video stream;
re-encode step for re-encoding the decoded video data by a parameter or an encoding scheme different from the state before decoding;
second protocol adding step for processing the second protocol;
first protocol adding step for processing the first protocol; and
IP processing step for processing the IP protocol.

15. An IP data cast transmission system according to claim 12, wherein the zapping stream corresponding to the service burst is not transmitted as long as the service burst is known to be transmitted within a predetermined time.

16. An IP data cast transmission system according to claim 12 or 15, wherein a starting IP address is shared by the zapping service and the original service related to each other.

17. An IP data cast transmission system according to claim 12 or 15, wherein the same starting IP address is used by all the zapping services.

**18.** A zapping data generating apparatus **characterized by** a method for generating the zapping data, the method comprising:

IP datagram extraction step for selectively extracting one service from the input IP datagram;
first protocol removing step for processing the first protocol from the extracted IP datagram;
second protocol removing step for processing the second protocol;
video stream extraction step for extracting the video stream subsequently;
video stream decode step for decoding the extracted video stream;
picture extraction step for extracting the proper portion from the decoded image data;
second protocol adding step for processing the second protocol;
first protocol adding step for processing the first protocol; and
IP processing step for processing the IP protocol;
wherein the zapping data generating apparatus further includes a still image memory and a still image selector.

## FIG. 1

FIG. 2

# FIG. 3

EP 1 793 590 A1

INPUT:
IP DATAGRAM

```
┌─────────────┐      ┌─────────────┐      ┌─────────────┐
│ EXTRACT IP  │ ───> │   REMOVE    │ ───> │   REMOVE    │
│  DATAGRAM   │      │     UDP     │      │ RTP HEADER  │
│             │      │   HEADER    │      │             │
└─────────────┘      └─────────────┘      └─────────────┘

┌─────────────┐      ┌─────────────┐      ┌─────────────┐
│   EXTRACT   │ ───> │   DECODE    │ ───> │   EXTRACT   │
│    VIDEO    │      │    VIDEO    │      │PICTURE (ONE │
│   STREAM    │      │   STREAM    │      │  PER SEC)   │
└─────────────┘      └─────────────┘      └─────────────┘

┌─────────────┐      ┌─────────────┐      ┌─────────────┐
│  SUPERPOSE  │ ───> │  SUPERPOSE  │ ───> │   ENCODE    │
│ ADDITIONAL  │      │ ADDITIONAL  │      │  PICTURE    │
│    TEXT     │      │    IMAGE    │      │             │
└─────────────┘      └─────────────┘      └─────────────┘

┌─────────────┐      ┌─────────────┐      ┌─────────────┐
│   ADD RTP   │ ───> │   ADD UDP   │ ───> │   ADD IP    │
│   HEADER    │      │   HEADER    │      │   HEADER    │
└─────────────┘      └─────────────┘      └─────────────┘
```

OUTPUT:
IP DATAGRAM OF
ZAPPING SERVICE

# FIG.4

RELATION BETWEEN SERVICE AND ZAPPING SERVICE

SERVICE
BURST    ZAPPING SERVICE DATA

| TRANSMISSION PATH (ONLY ONE SERVICE DESCRIVED) |

0  1  2  3  4  5  6  7  8  9  time [s]

SELECT SERVICE AT TIME
POINT 1.5s

RECEIVE

0  1  2  3  4  5  6  7  8  9  time [s]

DISPLAY

LOGO    SERVICE

0  1  2  STILL   3 STILL  4 STILL  5  6  7  8  9  time [s]
          IMAGE 2   IMAGE 3   IMAGE 4

DELAY TIME BEFORE DISPLAY OF
SELECTED SERVICE

EP 1 793 590 A1

# FIG. 5

INPUT:
TS

PID FILTER

DECODE
VIDEO
STREAM

ENCODE
PICTURE

ADD RTP
HEADER

ADD UDP
HEADER

ADD IP
HEADER

OUTPUT:
  IP DATAGRAM
  OF SERVICE

EP 1 793 590 A1

## FIG. 6

INPUT:
TS →

PID FILTER

DECODE VIDEO STREAM → EXTRACT PICTURE (ONE PER SEC)

SUPERPOSE ADDTIONAL TEXT → SUPERPOSE ADDITIONAL IMAGE → ENCODE PICTURE

ADD RTP HEADER → ADD UDP HEADER → ADD IP HEADER →

OUTPUT:
IP DATAGRAM OF ZAPPING SERVICE

EP 1 793 590 A1

FIG. 7

INPUT:
IP DATAGRAM

CONTROL INFORMATION INPUT :
TS PACKET

OUTPUT:
IP DATAGRAM OF ZAPPING SERVICE

IP DATAGRAM OF CONTROL INFORMATION

EXTRACT IP DATAGRAM → REMOVE UDP HEADER → REMOVE RTP HEADER

EXTRACT VIDEO STREAM → DECODE VIDEO STREAM → EXTRACT PICTURE (ONE PER SEC)

SUPERPOSE ADDITIONAL TEXT → SIPERPOSE ADDITIONAL IMAGE → ENCODE PICTURE

ADD RTP HEADER → ADD UDP HEADER → ADD IP HEADER

ENCAPSULATE (INTO IP PACKET)

## FIG. 8

BURST OF SINGLE SERVICE

TRANSMISSION RATE

CONTINUOUSLY RELATED ZAPPING SERVICES

time [s]

EP 1 793 590 A1

FIG. 9

FIG. 10

TRANSMISSION RATE

BURST OF SINGLE SERVICE (TIME SLICE)

service1
service2
service3
service4
service5
service1
service2
service3
service4
service5

ZAPPING SERVICE

TIME

## FIG. 11

TRANSMISSION RATE

[Mbit/s]    1MPE-FEC FRAME (2Mbit)

SWITCH TO SERVICE 1,
REMOVE HEADER OF
SERVICE 1,

ACCESS TIME ZAPPING SERVICE 1:0.75 SEC

RECEIVE ZAPPING SERVICE 1

FIG. 12

EP 1 793 590 A1

# FIG. 13

Column # 0 ... 190

| Last padding bytes | |
| :---: | :---: |
| . . . | |
| Padding bytes cont. | |
| Last datagram | Padding bytes |
| | |
| . . . | |
| 2nd datagram cont. | 3rd datagram |
| 1st datagram cont. | 2nd datagram |
| 1st datagram | |

Row # 0 ... no_of_rows - 1

# FIG. 14

## FIG.15

CONTROL
INFORMATION INPUT:
TS PACKET

INPUT:
IP DATAGRAM

| EXTRACT IP DATAGRAM | → | REMOVE UDP HEADER | → | REMOVE RTP HEADER |

| EXTRACT VIDEO STREAM | → | DECODE VIDEO STREAM | → | EXTRACT PICTURE (ONE PER SEC) |

| SUPERPOSE ADDITIONAL TEXT | → | SUPERPOSE ADDITIONAL IMAGE | → | ENCODE PICTURE | | STILL IMAGE SELECTOR |

| ADD RTP HEADER | → | ADD UDP HEADER | → | ADD IP HEADER | → | STILL IMAGE MEMORY |

OUTPUT:
IP DATAGRAM OF
ZAPPING SERVICE

EP 1 793 590 A1

EP 1 793 590 A1

# INTERNATIONAL SEARCH REPORT

| International application No. |
| --- |
| PCT/JP2004/015255 |

**A. CLASSIFICATION OF SUBJECT MATTER**
Int.Cl$^7$ H04N5/44, H04H1/00

According to International Patent Classification (IPC) or to both national classification and IPC

**B. FIELDS SEARCHED**

Minimum documentation searched (classification system followed by classification symbols)
Int.Cl$^7$ H04N5/44-5/46, H04H1/00

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | EP 1337071 A2  (Nokia Corp.), 20 August, 2003 (20.08.03), Full text; all drawings & US 2003/200328 A1 | 1 |
| X | JP 2004-194294 A  (Canon Inc.), 08 July, 2004 (08.07.04), Full text; all drawings | 2-5,7-10,18 |
| Y | Full text; all drawings & US 2004/0117830 A1 | 1,13-14 |
| Y | JP 2003-259333 A  (Toshiba Corp.), 12 September, 2003 (12.09.03), Full text; all drawings (Family: none) | 13-14 |

☒ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 December, 2004 (09.12.04) | 28 December, 2004 (28.12.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/015255 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2004-165886 A (Sony Corp.),<br>10 June, 2004 (10.06.04),<br>Full text; all drawings<br>(Family: none) | 3-5,7-10 |
| A | JP 2003-087668 A (Mitsubishi Electric Corp.),<br>20 March, 2003 (20.03.03),<br>Full text; all drawings<br>(Family: none) | 3-5,7-10 |
| A | JP 08-289219 A (Sony Corp.),<br>01 November, 1996 (01.11.96),<br>Full text; all drawings<br>(Family: none) | 3-5,7-10 |
| A | JP 10-334264 A (Nippon Telegraph And Telephone Corp.),<br>18 December, 1998 (18.12.98),<br>Full text; all drawings<br>(Family: none) | 8 |
| A | JP 2003-324711 A (Matsushita Electric Industrial Co., Ltd.),<br>14 November, 2003 (14.11.03),<br>Full text; all drawings<br>& WO 2003/73753 A1     & EP 1479227 A1<br>& AU 2003/208613 A1 | 1-18 |
| A | JP 2004-023600 A (Nippon Telegraph And Telephone Corp.),<br>22 January, 2004 (22.01.04),<br>Full text; all drawings<br>(Family: none) | 1-18 |
| A | JP 11-032312 A (Matsushita Electric Industrial Co., Ltd.),<br>02 February, 1999 (02.02.99),<br>Full text; all drawings<br>(Family: none) | 1-18 |
| A | JP 2004-007461 A (Matsushita Electric Industrial Co., Ltd.),<br>08 January, 2004 (08.01.04),<br>Full text; all drawings<br>(Family: none) | 1-18 |

Form PCT/ISA/210 (continuation of second sheet) (January 2004)

**EP 1 793 590 A1**

## REFERENCES CITED IN THE DESCRIPTION

**Patent documents cited in the description**

- EP 1337071 A2